# EUROPÄISCHE PATENTSCHRIFT

(11) **EP 1 388 645 B1**
(45) Veröffentlichungstag und Bekanntmachung des Hinweises auf die Patenterteilung: **01.03.2006**
(21) Anmeldenummer: 03017923.8
(22) Anmeldetag: 06.08.2003
(51) Int. Cl.: F01M 11/03, B01D 35/00, B01D 29/00

(54) **Ölfilterkonsole für eine Brennkraftmaschine**
Oil filter support for an internal combustion engine
Support du filtre d'huile pour un moteur à combustion interne

(30) Priorität: 08.08.2002 DE 10236383
(43) Veröffentlichungstag der Anmeldung: 11.02.2004
(73) Patentinhaber: DEUTZ Aktiengesellschaft, 51063 Köln (DE)
(72) Erfinder: Bauer, Lothar, 51109 Köln (DE); Lemme, Werner, 51503 Rösrath (DE)

(56) Entgegenhaltungen:
- EP-A- 0 969 185
- GB-A- 1 595 051
- US-A- 3 353 590
- US-A- 5 351 664

## Beschreibung

Die Erfindung betrifft eine Ölfilterkonsole, die an einer Brennkraftmaschine befestigt ist, und über Ölkanäle mit dem Ölkreislauf der Brennkraftmaschine verbunden ist, wobei an der Ölfilterkonsole ein Ölfilter befestigt ist und in die Ölfilterkonsole ein als Thermo-Steuerventil ausgebildetes Ölsteuerventil integriert ist, das ein Stellelement in Abhängigkeit der Öltemperatur ansteuert.

Eine derartige Ölfilterkonsole ist aus der EP 0 969 185 A1 bekannt. Diese Ölfilterkonsole kann an das Kurbelgehäuse einer Brennkraftmaschine angebaut werden und beinhaltet neben der Anschlussvorrichtung für eine Ölfilterpatrone zusätzlich ein in die Konsole eingesetztes Ölsteuerventil. Das Ölsteuerventil, das als Thermo-Steuerventil ausgebildet ist, ist so eingestellt, dass unterhalb vorgegebener Öltemperaturen der Durchfluss durch einen Schmierölwärmetauscher blockiert und stattdessen das Öl über eine Umgehungsleitung zu dem Schmierölwärmetauscher in den Ölkreislauf der Brennkraftmaschine eingeleitet wird.

Der Erfindung liegt die Aufgabe zugrunde, eine Ölfilterkonsole bereitzustellen, in die ein Steuerventil funktionell optimiert integriert ist.

Diese Aufgabe wird dadurch gelöst, dass das Thermo-Steuerventil ein als hydraulischer Pumpenstößel ausgebildetes Stellelement in Abhängigkeit der Öltemperatur ansteuert. Bei dieser Ausbildung wird in die Ölfilterkonsole ein Thermo-Steuerventil integriert, das einerseits bei einer Weiterentwicklung bei einer Brennkraftmaschine zusätzlich erforderlich geworden ist und durch die erfindungsgemäße Ausgestaltung ohne nennenswerte Umkonstruktion der Brennkraftmaschine an dieser integriert werden kann. Dabei ist es für Varianten der Brennkraftmaschine, bei der das Thermo-Steuerventil nicht benötigt wird, möglich, eine andere oder eine Ölfilterkonsole ohne das Thermo-Steuerventil zu verbauen. Im Rahmen der vorliegenden Erfindung ist es auch möglich, zusätzlich ein Absteuerventil und/oder ein Umgehungsventil in die Ölfilterkonsole zu integrieren.

In Weiterbildung der Erfindung ist der hydraulische Pumpenstößel Teil eines Einspritzpumpenelementes. Zur Vermeidung von Weißrauch ist es notwendig, bei kalter Brennkraftmaschine den Förderbeginn des in die einzelnen Brennräume der Zylinder einzuspritzenden Kraftstoffs nach "Früh" (bezogen auf die Stellung der Kurbelwelle beziehungsweise der Nockenwelle) zu verlegen. Dies erfolgt im Rahmen der Erfindung durch einen hydraulischen Pumpenstößel, der bei kalter Brennkraftmaschine auseinander gefahren wird und dadurch die Förderbeginn-Verstellung bewirkt.

In Weiterbildung der Erfindung wirkt das Thermo-Steuerventil mit einem Schieber zusammen, der den Ölfluss zu dem Stellelement beherrscht. Durch diese Ausbildung sind alle die Steuerung vornehmenden Bauteile in die Ölfilterkonsole integriert.

Es zeigen:

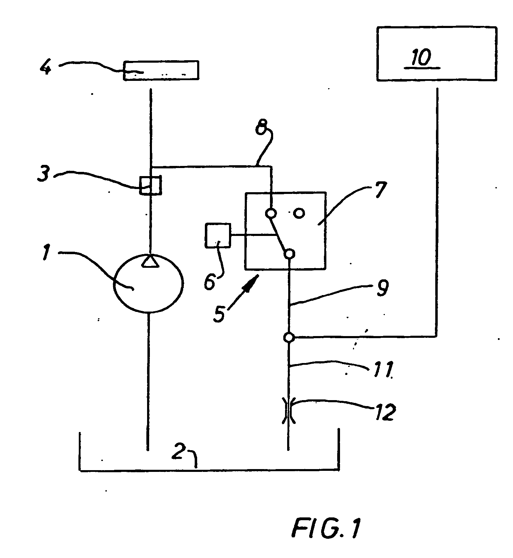

- Fig. 1: ein Schaltschema des Ölkreislaufs,
- Fig. 2: einen Querschnitt durch die Ölfilterkonsole,
- Fig. 3: einen Längsschnitt durch die Ölfilterkonsole,
- Fig. 4: eine Rückansicht der Ölfilterkonsole.

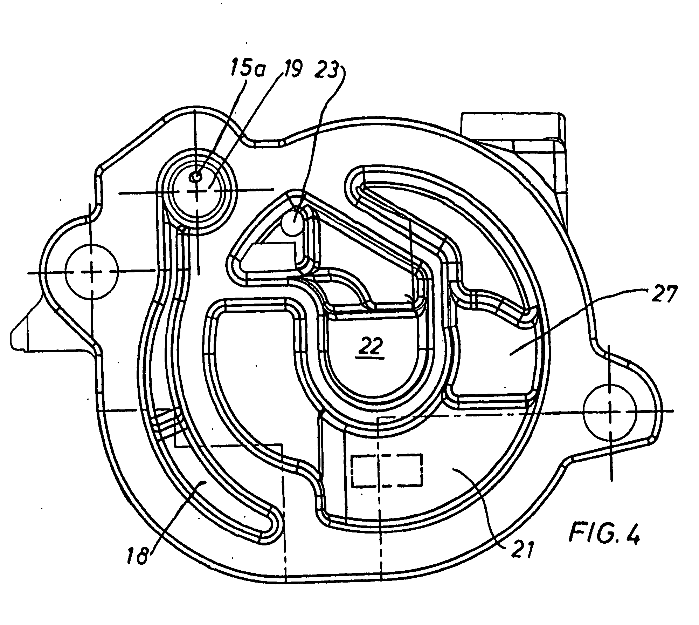

Eine Schmierölpumpe 1 fördert aus einer Ölwanne 2 Schmieröl durch einen Ölfilter 3 in den Schmierölkreislauf der Brennkraftmaschine 4. Dabei wird hinter dem Ölfilter 3 ein Schmierölteilstrom abgezweigt und einem Thermo-Steuerventil 5 zugeführt. Das Thermo-Steuerventil 5 weist ein ölumströmtes Thermo-Element 6 auf, das einen Schieber 7 betätigt, der die Ölzufuhrleitung 8 unterhalb einer vorgebbaren und gegebenenfalls einstellbaren Öltemperatur mit einer Weiterführungsleitung 9 verbindet. Oberhalb einer vorgegebenen Öltemperatur wird die Ölzufuhrleitung 8 durch den Schieber 7 abgesperrt (Fig. 3). Die Weiterführungsleitung 9 ist einerseits mit Pumpenstößeln 10 von Einzeleinspritzpumpenelementen verschaltet und andererseits mündet eine von der Weiterführungsleitung 9 abzweigende Absteuerleitung 11 über eine Drossel 12 in der Ölwanne 2. Über die Absteuerleitung 11 und die Drossel 12 wird, wenn die Ölzufuhrleitung 8 mit der Weiterführungsleitung 9 verbunden ist, eine geringe Teilmenge Öl in die Ölwanne 2 abgesteuert, so dass immer Öl mit der aktuellen Betriebstemperatur das Thermo-Element 6 umströmt. Weiterhin ist durch die Absteuerleitung 11 und die Drossel 12 sichergestellt, dass bei von der Ölzufuhrleitung 8 abgesperrter Weiterführungsleitung 9 das Öl aus den Pumpenstößeln 10 abgeleitet wird und die Rückstellung der Pumpenstößel 10 erfolgt. Die Einzeleinspritzpumpenelemente fördern Kraftstoff zu den einzelnen Brennräumen der Brennkraftmaschine. Unterhalb vorgegebener Betriebstemperaturen der Brennkraftmaschine, für die die Öltemperatur ein Maß ist, wird durch ein Verlängern des Pumpenstößels der Förderbeginn des Kraftstoffs, bezogen zu der Position der Kurbelwelle bzw. der Nockenwelle, vorverlegt. Dadurch wird bei kalter Brennkraftmaschine die Bildung von Weißrauch vermieden.

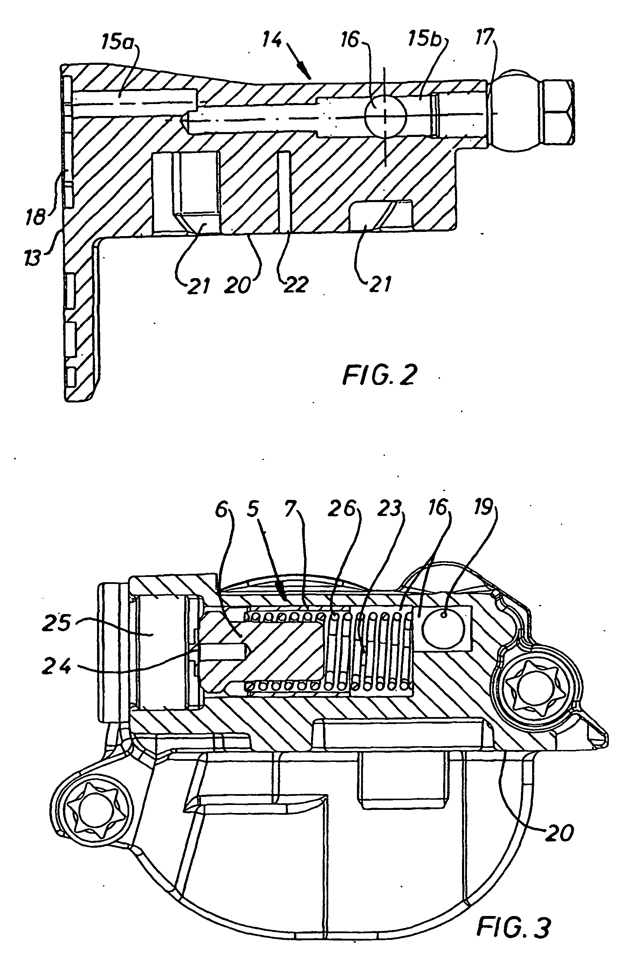

Der Querschnitt gemäß Fig. 2 zeigt die rückwärtige Fläche 13, mit der die Ölfilterkonsole 14 beispielsweise an dem Kurbelgehäuse der Brennkraftmaschine befestigt wird. In diese rückwärtige Fläche 13 sind Kanäle eingearbeitet, die nachfolgend in Zusammenhang mit Fig. 4 erläutert werden. Die Bohrungen 15a und 15b gehören zu der Weiterführungsleitung 9 und stehen mit einem quer zu den Bohrungen 15a, 15b verlaufenden Kanal 16 in Verbindung. Der Kanal 16 ist mit dem Thermo-Steuerventil 5 (Fig. 3) verbunden und stellt somit die Ölzufuhr zu den Bohrungen 15a, 15b dar. Die Bohrung 15b mündet stirnseitig in die Ölfilterkonsole 14, wobei an die Mündung 17 eine externe Leitung über ein Leitungsanschlussstück und eine Hohlschraube anschließbar ist. Über dieses externe Leitungssystem können die Pumpenstößel 10 teilweise oder insgesamt, je nach Ausgestaltung der Brennkraftmaschine, angesteuert werden. Bei einer 4-zylindrigen Brennkraftmaschine können dies beispielsweise die den Zylindern 2, 3 und 4 zugeordneten Pumpenstößel 10 sein. Die Bohrung 15a ist auf der rückwärtigen Fläche 13 der Ölfilterkonsole 14 mit einem offenen Kanal 18 (Fig. 4) verbunden, der eine interne Ansteuerung der Pumpenstößel 10 ermöglicht. Falls die Zuführleitungen zu den Pumpenstößeln 10 beispielsweise in das Kurbelgehäuse der Brennkraftmaschine eingearbeitet sind, erfolgt die Ölversorgung ausschließlich über die Bohrung 15a und die Bohrung 15b ist durch einen Deckel oder Stopfen verschlossen. Im Ausführungsbeispiel wird über den Kanal 18 der dem ersten Zylinder zugeordnete Pumpenstößel, in dessen Bereich die Ölfilterkonsole 14 an dem Kurbelgehäuse angeflanscht ist, mit Öl versorgt. In einer zwischen dem Kurbelgehäuse und der Ölfilterkonsole 14 anzuordnenden Dichtung ist eine Drosselbohrung 19 (Fig. 3) angeordnet, die die Drossel 12 darstellt. An die Unterseite 20 der Ölfilterkonsole 14 wird der Ölfilter hängend angeschraubt. Das von der Schmierölpumpe 1 geförderte Öl wird über den ringförmigen Zufuhrkanal 21 in den Ölfilter eingeleitet und verlässt den Ölfilter 3 gereinigt über den Abfuhrkanal 22. Der Abfuhrkanal 22 steht über eine Durchtrittsöffnung 23 mit dem Kanal 16 (Fig. 3) in Verbindung, wobei in den linken Teil des Kanals 16 das Thermo-Steuerventil 5 eingesetzt ist. Das Thermo-Steuerventil 5 weist ein Thermo-Element 6 auf, das einen ausfahrbaren Bolzen 24 beinhaltet, der sich gegen einen Deckel 25 abstützt. Bei Erwärmung des in den Kanal 16 befindlichen Öls wird der Bolzen 24 aus dem Thermo-Element 6 ausgefahren und verschiebt das Thermo-Element 6 folglich gegen die Kraft einer Feder 26. Dabei wird der sich an einer Schulter des Thermo-Elements 6 abstützende Schieber 7 in Richtung zu der Durchtrittsöffnung 23 bewegt und sperrt diese schließlich ab. Nach Abstellung der Brennkraftmaschine und Abkühlung des Öls schiebt die Feder 26 den Schieber 7 und das Thermo-Element 6 wieder gegen den Deckel 25 in die Ausgangslage zurück.

Die rückwärtige Ansicht gemäß Fig. 4 zeigt den Kanal 15a, der mit dem offenen Kanal 18 verbunden ist. In die Bohrung 15a ist zur Darstellung der Funktionszusammenhänge die Drosselbohrung 19 eingezeichnet, wobei diese aber - wie ausgeführt -im Ausführungsbeispiel in die Dichtung eingearbeitet ist. Das von der Schmierölpumpe 1 geförderte Öl gelangt von dem Kurbelgehäuse über einen Durchbruch in der Dichtung in den ringförmigen Zuführkanal 21. Über den Abfuhrkanal 22 wird das gereinigte Öl über einen Durchtritt in der Dichtung in das Leitungssystem der Brennkraftmaschine weitergeleitet und über die Durchtrittsöffnung 23 in den Kanal 16.

## Patentansprüche

1. Ölfilterkonsole, die an einer Brennkraftmaschine befestigbar ist, und über Ölkanäle mit dem Ölkreislauf der Brennkraftmaschine verbindbar ist, wobei an der Ölfilterkonsole ein Ölfilter (3) befestigt ist und in die Ölfilterkonsole ein als Thermo-Steuerventil (5) ausgebildetes Ölsteuerventil integriert ist, das ein Stellelement in Abhängigkeit der Öltemperatur ansteuert,
**dadurch gekennzeichnet, dass** das Stellelement ein hydraulischer Pumpenstößel (10) ist.

2. Ölfilterkonsole nach Anspruch 1,
**dadurch gekennzeichnet, dass** der Pumpenstößel (10) Teil eines Einspritzpumpenelementes ist.

3. Ölfilterkonsole nach einem der vorherigen Ansprüche,
**dadurch gekennzeichnet, dass** das Thermo-Steuerventil mit einem Schieber (7) zusammenwirkt, der den Ölzufluss zu dem hydraulischen Pumpenstößel (10) beherrscht.

## Claims

1. Oil filter support which can be fastened to an internal combustion engine and which can be connected to the oil circuit of the internal combustion engine via oil ducts, an oil filter (3) being fastened to the oil filter support, and an oil control valve, embodied as a thermal control valve (5), being integrated into the oil filter support and controlling an actuating element as a function of the oil temperature,
**characterized in that** the actuating element is a hydraulic pump ram (10).

2. Oil filter support according to Claim 1,
**characterized in that** the hydraulic pump ram (10) is part of an injection pump element.

3. Oil filter support according to one of the preceding claims,
**characterized in that** the thermal control valve interacts with a pusher (7) which controls the flow of oil to the hydraulic pump ram (10).

## Revendications

1. Console pour filtre à huile qui peut être fixée sur un moteur à combustion interne et peut être reliée au circuit de lubrification du moteur à combustion interne par des canaux d'huile, où un filtre à huile (3) est fixé sur la console pour filtre à huile et où la console pour filtre à huile intègre une valve de commande d'huile conçue en tant que valve à commande thermique (5) et qui pilote un élément de réglage en fonction de la température d'huile, **caractérisée en ce que** l'élément de réglage est un piston de pompe hydraulique (10).

2. Console pour filtre à huile selon la revendication 1, **caractérisée en ce que** le piston de pompe (10) fait partie d'un élément de pompe d'injection monocylindrique.

3. Console pour filtre à huile selon l'une quelconque des revendications, **caractérisée en ce que** la valve à commande thermique agit conjointement avec un tiroir (7) qui contrôle de débit d'huile vers le piston de pompe hydraulique (10).
